# EUROPEAN PATENT APPLICATION

(11) **EP 3 767 538 A1**
(43) Date of publication of application: **20.01.2021**
(21) Application number: 20184190.5
(22) Date of filing: 06.07.2020
(51) Int. Cl.: G06K 9/68, G06K 9/62

(54) **SEQUENTIAL CLASSIFICATION FOR COMMODITY IDENTIFICATION**

(30) Priority: 17.07.2019 JP 2019132012
(71) Applicant: Toshiba TEC Kabushiki Kaisha, Tokyo 141-8562 (JP)
(72) Inventor: Sawada, Takayuki, Tokyo 141-8562 (JP)
(74) Representative: Hoffmann Eitle

(57) **Abstract**

A commodity identification apparatus includes a camera directed to a commodity placement region, a storage device, and a processor. A category dictionary and a plurality of commodity dictionaries corresponding to a plurality of commodity categories, respectively, are stored in the storage device. The processor performs a first operation to identify a commodity category of a commodity in an image captured by the camera by reference to the category dictionary stored in the storage device. The processor then selects, as a target commodity dictionary, one of the plurality of commodity dictionaries corresponding to the identified commodity category. The processor then performs a second operation to identify the commodity by reference to the target commodity dictionary.

## Description

### CROSS-REFERENCE TO RELATED APPLICATION

This application is based upon and claims the benefit of priority from Japanese Patent Application No. 2019-132012, filed in July 17, 2019, the entire contents of which are incorporated herein by reference.

### FIELD

Embodiments described herein relate to a commodity identification device and a commodity identification method.

### BACKGROUND

A commodity identification system of one type identifies a commodity included in an image using stored dictionary information generated by machine learning. Such a commodity identification system may need to update dictionary information when a commodity is added or removed from the list of candidate commodities. Since the dictionary information is generated and updated by machine learning, a large number of steps (for example, man-hours and/or time) may be required for the update of the dictionary information.

### SUMMARY OF THE DESCRIPTION

One of the objects of the present invention is to improve prior art techniques and overcome at least some of the prior art problems as for instance above illustrated.

According to a first aspect of the invention, it is provided a commodity identification apparatus comprising a camera directed at a commodity placement region; a storage device in which a category dictionary and a plurality of commodity dictionaries corresponding to a plurality of commodity categories, respectively, are stored; and a processor configured to perform a first operation to identify a commodity category of a commodity included in an image captured by the camera with reference to the category dictionary stored in the storage device; select, as a target commodity dictionary, one of the plurality of commodity dictionaries corresponding to the identified commodity category; and perform a second operation to identify the commodity with reference to the target commodity dictionary.

Optionally, in the commodity identification apparatus according to the first aspect of the invention, the plurality of commodity dictionaries includes a first commodity dictionary corresponding to a first commodity category and a second commodity dictionary corresponding to a second commodity category, and the processor selects the first commodity dictionary as the target commodity dictionary when the identified commodity category is the first commodity category and selects the second commodity dictionary as the target commodity dictionary when the identified commodity category is the second commodity category.

Optionally, in the commodity identification apparatus according to the first aspect of the invention, the category dictionary indicates an external feature of a commodity category with respect to each of multiple commodity categories, and during the first operation, the processor determines an image region of the commodity from the image captured by the camera and determines the commodity category of the commodity based on an external feature of the image region with reference to the category dictionary.

Optionally, in the commodity identification apparatus according to the first aspect of the invention, during the first operation, the processor determines a plurality of image regions of commodities from the image captured by the camera and selects one of the image regions corresponding to the commodity.

Optionally, in the commodity identification apparatus according to the first aspect of the invention, the processor is further configured to update the category dictionary through a machine learning process based on a result of the first operation.

Optionally, in the commodity identification apparatus according to the first aspect of the invention, each of the commodity dictionaries associates a feature value of a representative image for each of multiple commodities that are categorized into a corresponding commodity category, and during the second operation, the processor determines a feature value of the image region and identifies the commodity based on the feature value of the image region with reference to the target commodity dictionary.

Optionally, in the commodity identification apparatus according to the first aspect of the invention, the processor is further configured to update the target commodity dictionary through a machine learning process based on a result of the second operation.

Optionally, in the commodity identification apparatus according to the first aspect of the invention, the processor is further configured to remove a feature value of a representative image of a commodity that is deregistered from one of the commodity dictionaries without making changes to the category dictionary.

Optionally, in the commodity identification apparatus according to the first aspect of the invention, the processor is further configured to perform a transaction settlement operation for the commodity identified through the second operation.

Optionally, in the commodity identification apparatus according to the first aspect of the invention, the processor is further configured to compare an identification of the commodity that is obtained in advance to an identification of the commodity obtained through the second operation.

According to a second aspect of the invention, it is provided a method for commodity identification, comprising storing a category dictionary and a plurality of commodity dictionaries corresponding to a plurality of commodity categories, respectively; performing a first operation to identify a commodity category of a commodity included in an image captured by a camera with reference to the category dictionary; selecting, as a target commodity dictionary, one of the plurality of commodity dictionaries corresponding to the identified commodity category; and performing a second operation to identify the commodity with reference to the target commodity dictionary.

Optionally, in the method according to the second aspect of the invention, the plurality of commodity dictionaries includes a first commodity dictionary corresponding to a first commodity category and a second commodity dictionary corresponding to a second commodity category, and the selecting one of the plurality of commodity dictionaries comprises: selecting the first commodity dictionary as the target commodity dictionary when the identified commodity category is the first commodity category; and selecting the second commodity dictionary as the target commodity dictionary when the identified commodity category is the second commodity category.

Optionally, in the method according to the second aspect of the invention, the category dictionary associates an external feature of a commodity category with respect to each of multiple commodity categories, and the first operation comprises: detecting an image region of the commodity from the image captured by the camera; and selecting the commodity category of the commodity based on an external feature of the image region with reference to the category dictionary.

Optionally, in the method according to the second aspect of the invention, detecting the image region of the commodity comprises detecting a plurality of image regions of commodities from the image captured by the camera; and selecting one of the image regions corresponding to the commodity.

Optionally, the method according to the second aspect of the invention further comprises updating the category dictionary through a machine learning process based on a result of the first operation.

Optionally, in the method according to the second aspect of the invention, each of the commodity dictionaries associates a feature value of a representative image of a commodity with respect to each of multiple commodities that are categorized into a corresponding commodity category, and the second operation comprises: calculating a feature value of the image region of the commodity; and identifying the commodity based on the feature value of the image region with reference to the target commodity dictionary.

Optionally, the method according to the second aspect of the invention further comprises updating the target commodity dictionary through a machine learning process based on a result of the second operation.

Optionally, the method according to the second aspect of the invention further comprises removing a feature value of a representative image of a commodity that is deregistered from one of the commodity dictionaries without making changes to the category dictionary.

Optionally, the method according to the second aspect of the invention further comprises performing a transaction settlement operation for the commodity identified through the second operation.

Optionally, the method according to the second aspect of the invention further comprises comparing an identification of the commodity that is obtained in advance to an identification of the commodity obtained through the second operation.

### DESCRIPTION OF THE DRAWINGS

FIG. 1 is a schematic diagram of a checkout device according to a first embodiment.
FIG. 2 is a block diagram of a checkout device.
FIG. 3 is a diagram showing an example of categories of commodities.
FIG. 4 is a flowchart of an operation of a checkout device.
FIG. 5 is a block diagram of a commodity inspection device according to a second embodiment.
FIG. 6 is a flowchart of an operation of a commodity inspection device.

### DETAILED DESCRIPTION

According to an embodiment, a commodity identification apparatus includes a camera directed towards a commodity placement region, a storage device, and a processor. A category dictionary and a plurality of commodity dictionaries corresponding to a plurality of commodity categories, respectively, are stored in the storage device. The processor is configured to perform a first operation to identify a commodity category of a commodity in an image captured by the camera. The commodity category is identified by reference to the category dictionary stored in the storage device. The processor then selects, as a target commodity dictionary, one of the plurality of commodity dictionaries corresponding to the identified commodity category. The process performs a second operation to identify the commodity by reference to the target commodity dictionary.

Hereinafter, certain example embodiments will be described with reference to the accompanying drawings.

### (First Embodiment)

In the first embodiment, a checkout device will be described as an example of an image-recognition-based commodity identification device or system. The checkout device according to the first embodiment settles payments for a commodity (that is, a product or item) being purchased by a customer such as a user/operator of the checkout device in a sales transaction or the like. The checkout device captures an image of the commodity. The checkout device identifies (specifies) the commodity from the captured image. The checkout device then performs functions for registering the specified commodity and then settling the specified commodity in the sales transaction.

For example, the checkout device is provided as a cash register or point-of-sale terminal for settling a commodity transaction in a retail store or the like. The checkout device may be provided as a self-service type register or kiosk by which a user performs the settlement process by himself or herself. In addition, the checkout device may be provided as a standard-type register terminal at which a store clerk performs a settlement process for the customer.

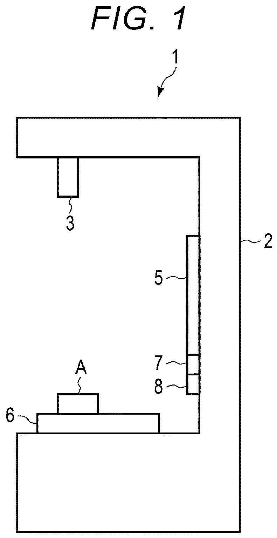

FIG. 1 is a schematic block diagram showing a configuration example of a checkout device 1 according to the first embodiment. As shown in FIG. 1, the checkout device 1 includes a housing 2, a camera 3, an operation panel 5, a commodity table 6, an electronic money interface 7, a customer information interface 8, and the like.

The housing 2 is a frame that forms the external form of the checkout device 1. The housing 2 is formed such that the commodity table 6 can be disposed. In the example shown in FIG. 1, the housing 2 is formed to have a U-shape.

The camera 3 is directed downward and provided at an upper portion of the housing 2. The camera 3 captures an image of a commodity (for example, a commodity A) that has been placed on the commodity table 6. That is, the camera 3 is provided so as to capture an image of the commodity from above. The camera 3 may be provided so as to capture an image of a commodity obliquely from above rather than directly overhead. The position and direction in which the camera 3 is provided are not limited to any specific configuration and, in general, any position and/or direction for the camera 3 may be adopted so long as an image of the commodity can be obtained. The camera 3 transmits a captured image to a processor 11.

The operation panel 5 is a user interface that receives an input from an operator and displays various pieces of information for the operator. The operation panel 5 may include an operation unit for inputs of instructions and a display unit that displays information.

The operation panel 5 transmits a signal to the processor 11 indicating the user input operation received . Here, the operation unit may include a touch panel type display. The operation unit may further include a keyboard and/or a numeric keypad.

The operation panel 5 displays an image as instructed by the processor 11 as an operation of the display unit. For example, the display unit includes a liquid crystal monitor. The display unit can be formed integrally with a touch panel as integrated operation unit.

The commodity table 6 is provided at a lower portion of the housing 2. The commodity table 6 is a table for supporting a commodity being purchased. The commodity table 6 may be referred to as a commodity placement region and need not be a table per se, but may, for example, be some portion of a countertop, checkout stand, a shelf, a ledge, or the like. For example, the commodity table 6 is formed in a rectangular shape having a predetermined size. The commodity table 6 may include a sensor that detects the disposition of a commodity placed thereon. Such a sensor transmits a signal indicating that a commodity has been disposed thereon or removed therefrom to the processor 11.

In addition, the commodity table 6 may be a table sized or otherwise adapted for supporting a container, such as a shopping basket, which stores the commodity A therein.

Here, it is assumed that commodities are disposed on the commodity table 6 so as not to overlap each other.

The electronic money interface 7 is an interface that acquires electronic payment from a terminal (e.g., smartphone) owned by the customer/user. For example, the electronic money interface 7 transmits and receives data to and from the terminal owned by a user in a wireless manner. For example, the electronic money interface 7 supports near field communication (NFC) communication for communicating with an IC (integrated circuit) card or the like in a wireless manner.

The customer information interface 8 is an interface for acquiring customer information. For example, the customer information interface 8 acquires information for specifying a user/customer. In addition, the customer information interface 8 may acquire credit card information as customer information of a user.

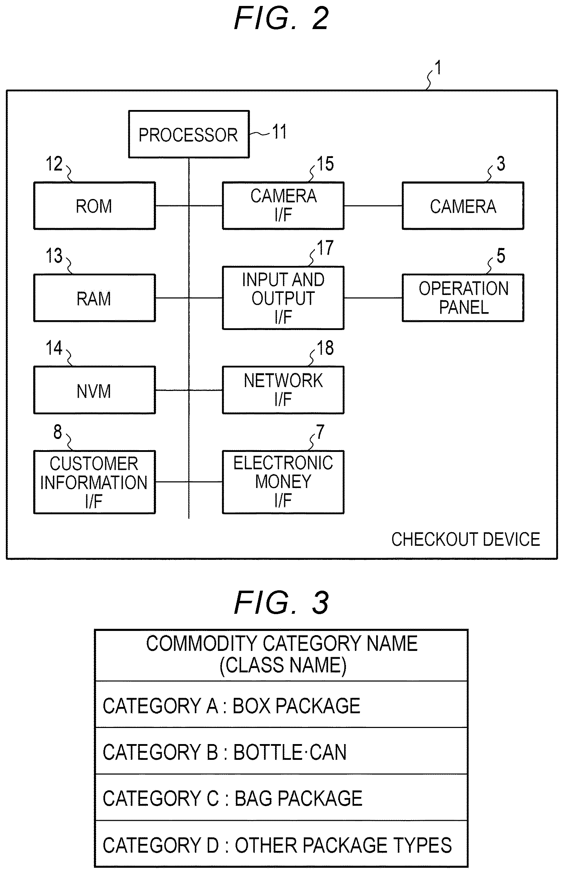

FIG. 2 is a block diagram showing a configuration example of the checkout device 1. As shown in FIG. 2, the checkout device 1 includes the camera 3, the operation panel 5, the electronic money interface 7, the customer information interface 8, the processor 11, a ROM 12, a RAM 13, an NVM 14, a camera interface 15, an input and output (I/O) interface 17, a network interface 18, and the like.

The processor 11, the electronic money interface 7, the customer information interface 8, the ROM 12, the RAM 13, the NVM 14, the camera interface 15, the I/O interface 17, and the network interface 18 are electrically connected to each other. The camera interface 15 is electrically connected to the camera 3. The I/O interface 17 is electrically connected to the operation panel 5.

The camera 3, the operation panel 5, the electronic money interface 7, and the customer information interface 8 are as described above.

The processor 11 controls the overall operation of the checkout device 1. The processor 11 may include an internal cache, various interfaces, and the like. The processor 11 realizes various processes by executing programs which are stored in the internal cache, the ROM 12, or the NVM 14 in advance.

Some of the various functions described in this example as realized by the processor 11 executing programs may instead, or in addition to, be realized by a dedicated or specialized hardware circuit. In this case, the processor 11 controls functions executed by the hardware circuit.

The ROM 12 is a non-volatile memory in which control programs, control data, and the like are stored in advance. The control programs and the control data stored in the ROM 12 are incorporated in advance in accordance with specifications of the checkout device 1.

The RAM 13 is a volatile memory. The RAM 13 temporarily stores data which is being processed by the processor 11, and the like. The RAM 13 stores various application programs on the basis of a command received from the processor 11. In addition, the RAM 13 may store data required to execute application programs, execution results of the application programs, and the like.

The NVM 14 (is a non-volatile memory in which data can be written and rewritten. The NVM 14 includes, for example, a hard disk drive (HDD), a solid state drive (SSD), a flash memory, or the like. The NVM 14 stores control programs, applications, various pieces of data, and the like in accordance with the purpose of operation of the checkout device 1.

The NVM 14 stores a category dictionary and a plurality of commodity dictionaries. The category dictionary and the commodity dictionary will be described below.

Here, the processor 11, the ROM 12, the RAM 13, the NVM 14, and the like may be considered a computer.

The camera interface 15 is an interface for transmitting and receiving data to and from the camera. For example, the camera interface 15 transmits a signal for instructing the camera 3 to capture an image on the basis of the control of the processor 11. In addition, the camera interface 15 acquires a captured image obtained by the camera 3. For example, the camera interface 15 may be an interface that supports connection through a universal serial bus (USB) or may be an interface that supports connection through a camera link.

The input and output (I/O) interface 17 is an interface for transmitting and receiving data to and from the operation panel 5. For example, the I/O interface 17 receives a signal indicating an operation that has been received from an operator at the operation panel 5. The I/O interface 17 transmits the received signal to the processor 11. In addition, the I/O interface 17 transmits information indicating a screen displayed for an operator to the operation panel 5 on the basis of the control of the processor 11. For example, the I/O interface 17 may be an interface that supports USB connections or may be an interface that supports connection through a parallel I/F.

The network interface 18 is for communicating with an external device via communication network. For example, the network interface 18 is connected to an external device through an external network such as the Internet or an internal network such as a local area network (LAN). For example, the network interface 18 is an interface for supporting wired or wireless LAN connections.

The checkout device 1 may include other components as necessary in addition to the specific configurations shown in FIGS. 1 and 2. Likewise, in some embodiment, a depicted component or specific configuration aspect may be omitted from the checkout device 1.

Next, a category dictionary will be described.

The category dictionary is a dictionary for identifying the category of a commodity from an image in which the commodity is seen. The category is classification based on external features of a commodity. That is, the category is classification based on the shape of a commodity, or the like.

FIG. 3 shows an example of categories specified by a category dictionary. As shown in FIG. 3, the category dictionary is a dictionary for specifying a commodity as any one of categories A to D.

The categories A to D are based on external features of commodities, respectively.

The category A is a "box package". That is, the category A is classification for a commodity which is packaged in a box shape.

The category B is a "bottle·● can". That is, the category B is classification for a commodity having a bottle shape and a commodity having a can shape.

The category C is a "bag package". That is, the category C is classification for a commodity which is packaged in a bag shape.

The category D is "other package types". That is, the category D is classification for a commodity other than the categories A to C.

Here, the category dictionary is a dictionary which is obtained by machine learning. For example, the category dictionary is a dictionary for using a neural network generated by deep learning. For example, the category dictionary is information for realizing a deep neural network (DNN). The configuration of the category dictionary is not limited to any specific configuration.

The category dictionary is stored in the NVM 14 in advance. The category dictionary may be appropriately updated.

Next, a commodity dictionary will be described.

The commodity dictionary is a dictionary for specifying a commodity from an image in which a commodity is seen. In addition, the commodity dictionary is a dictionary corresponding to a predetermined category. That is, the commodity dictionary is a dictionary for specifying commodities which are classified into predetermined categories. The commodity dictionary is a dictionary for specifying a commodity seen in an image from a plurality of commodities classified into predetermined categories.

For example, the commodity dictionary is a dictionary for specifying a commodity using a feature value matching method. For example, the commodity dictionary stores feature value information regarding feature values of images of commodities classified into predetermined categories (for example, an average value, dispersion, and the like of feature values). In addition, the commodity dictionary may store coordinates of a feature point, feature values, and the like in an image of a commodity as feature value information.

A configuration of the commodity dictionary is not limited to a specific configuration.

The NVM 14 stores commodity dictionaries corresponding to a plurality of categories. Here, the NVM 14 stores commodity dictionaries corresponding to the categories A to D.

The commodity dictionaries are stored in the NVM 14 in advance. The commodity dictionaries may be appropriately updated.

Next, functions realized by the checkout device 1 will be described. The functions realized by the checkout device 1 are realized by the processor 11 executing programs stored in the ROM 12, the NVM 14, or the like.

First, the processor 11 has a function of acquiring an image (captured image) obtained by imaging the commodity table 6 on which a commodity is disposed.

The processor 11 determines whether or not a commodity specification process is started. For example, the processor 11 detects that a commodity is disposed on the commodity table 6 by a user. For example, the processor 11 detects that a commodity is disposed on the commodity table 6 on the basis of a signal received from the commodity table 6. In some examples, the processor 11 may detect that a commodity is on the commodity table 6 on the basis of an image obtained by the camera 3. In addition, the processor 11 may receive an operation indicating that a commodity is on the commodity table 6 from the user.

When the processor 11 detects that a commodity is on the table 6, the processor determines that a commodity specification process has been started. When it is determined that the commodity specification process is started, the processor 11 captures an image including the commodity. For example, the processor 11 transmits a signal for performing an imaging to the camera 3. The processor 11 acquires a captured image from the camera 3. In some examples, the processor 11 may additionally set imaging parameters in the camera 3 in order to capture an image.

In other examples, the processor 11 may acquire a captured image from an external device rather than directly from camera 3.

In addition, the processor 11 has a function of extracting from a captured image a region (commodity region) in which the commodity can be seen/detected.

The processor 11 extracts one or more commodity regions of commodities from a captured image. For example, the processor 11 performs edge detection or the like to extract a commodity region (or regions) from a captured image. In addition, the processor 11 may extract commodity regions from a captured image by using artificial intelligence (AI) such as deep learning.

In some examples, processor 11 may extract one or more commodity regions on the basis of distance information indicating a distance from a reference point or a reference surface to a commodity. In this case, the checkout device 1 includes a distance sensor.

The method by which the processor 11 extracts commodity regions is not limited to any specific method.

The processor 11 has a function of specifying the category of a commodity from the commodity region with reference to a category dictionary.

The processor 11 selects one commodity region from the extracted commodity regions. The processor 11 then specifies the category of the commodity which is seen in the selected commodity region by reference to the category dictionary. For example, the processor 11 specifies the category using DNN techniques based on a category dictionary.

The processor 11 also has a function of selecting a commodity dictionary on the basis of the identified category for the commodity.

The processor 11 selects a commodity dictionary corresponding to the identified category. For example, when the processor 11 determines that the category of a commodity in a commodity region is category A, a commodity dictionary corresponding to the category A is selected.

The processor 11 next has a function of identifying the commodity seen in a selected commodity region by reference to the selected commodity dictionary.

For example, the processor 11 extracts a feature value from the selected commodity region. The processor 11 then matches/compares feature value information stored in the commodity dictionary to the extracted feature value. The processor 11 specifies a commodity corresponding to the feature value information matched in the commodity dictionary to the extracted feature value as the commodity in the selected commodity region.

The method by which the processor 11 specifies a commodity by reference to a commodity dictionary is not limited to any specific method.

The processor 11 then stores information corresponding to the identified commodity in a recognition result list.

In addition, the processor 11 has the function of settling the sales transaction including the specified commodity.

For example, the processor 11 acquires the prices of those commodities indicated by a recognition result list. The processor 11 then calculates the total sales amount based on the prices and the recognition results list. The processor 11 displays the calculated total sales amount in the operation panel 5 or the like.

The processor 11 then performs processing for settling the sales transaction in accordance with the calculated total amount. For example, when a user performs settlement using electronic payment, the processor 11 acquires electronic money information from a terminal owned by a user through the electronic money interface 7.

If a user performs settlement using a credit card, the processor 11 acquires credit card information through the customer information interface 8.

In some examples, the processor 11 may also settle a commodity registered using a code such as a two-dimensional code (e.g., barcode or QR code). In general, the possible methods by which the processor 11 registers a commodity for settlement is not limited to any specific method.

Next, an operation example of the checkout device 1 will be described.

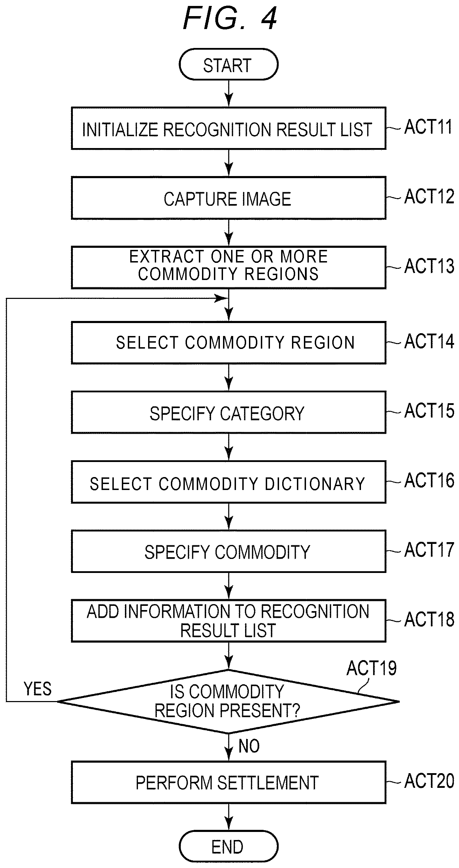

FIG. 4 is a flowchart showing an operation example of the checkout device 1.

Here, it is assumed that a user places a commodity on the commodity table 6.

First, the processor 11 of the checkout device 1 initializes a recognition result list (ACT11). When the recognition result list is initialized, the processor 11 acquires a captured image using the camera 3 (ACT12).

When the captured image is acquired, the processor 11 extracts one or more commodity regions from the captured image (ACT13) . When the one or more commodity regions are extracted, the processor 11 selects one commodity region from the extracted one or more commodity regions (ACT14).

When one commodity region is selected, the processor 11 specifies the category of a commodity in the selected commodity region with reference to a category dictionary (ACT15). When the category is specified, the processor 11 selects a commodity dictionary corresponding to the specified category (ACT16).

When the commodity dictionary is selected, the processor 11 identifies the commodity in the commodity region by reference to the selected commodity dictionary (ACT17). Once the commodity is identified, the processor 11 adds information corresponding to the commodity to a recognition result list (ACT18).

When the information corresponding to the identified commodity has been stored in the recognition result list, the processor 11 next determines whether there is a commodity region in which a commodity has not yet been specified (ACT19) . When it is determined that there is a commodity region in which a commodity has not yet been specified (ACT19, YES), the processor 11 returns to ACT14.

When it is determined that there is no commodity region for a commodity has not been specified (ACT19, NO), the processor 11 settles the identified commodity or commodities provided on the recognition result list (ACT20). Once the commodity transaction is settled, the processor 11 terminates the operation.

In some examples, the processor 11 may not perform the settlement process. That is, in some examples, the processor 11 may instead transmit the recognition result list to an external device for settlement/payment processing purposes or the like.

In addition, the checkout device 1 may not itself store all category dictionaries and commodity dictionaries. The processor 11 instead may acquire a category dictionary and a commodity dictionary, or relevant portions thereof, as necessary from an external device.

The checkout device 1 configured as described above identifies the category of a commodity from a captured image using a category dictionary for realizing a DNN technique or the like. The checkout device 1 then selects a particular commodity dictionary corresponding to the identified category from a plurality of available commodity dictionaries. The checkout device 1 then identifies the commodity by using the selected commodity dictionary.

For this reason, when an identifiable commodity is added to or removed from commodity candidates, the checkout device 1 may update just the commodity dictionary including the particular commodity without necessarily updating the category dictionary substantially or at all. For example, when the commodity dictionary stores feature value information, the checkout device may add or remove the feature value information stored in the commodity dictionary corresponding to the added or removed commodity. Accordingly, the checkout device can efficiently perform a process of adding or removing an identifiable commodity.

In addition, since the checkout device 1 identifies a commodity using just the selected commodity dictionary, the checkout device 1 can typically identify the commodity in a shorter period of time than when feature value information in all the possible commodity dictionaries must be matched/compared to the extracted feature value from a commodity region.

### (Second Embodiment)

In the second embodiment, a commodity inspection device will be described as an example of a commodity identification system. The commodity inspection device according to the second embodiment is different from the checkout device 1 according to the first embodiment in that a commodity inspection process is being performed rather than sales transaction (checkout) processing. However, those aspects substantially corresponding to the first embodiment are denoted by the same reference symbols, and additional description thereof will be omitted from the second embodiment description.

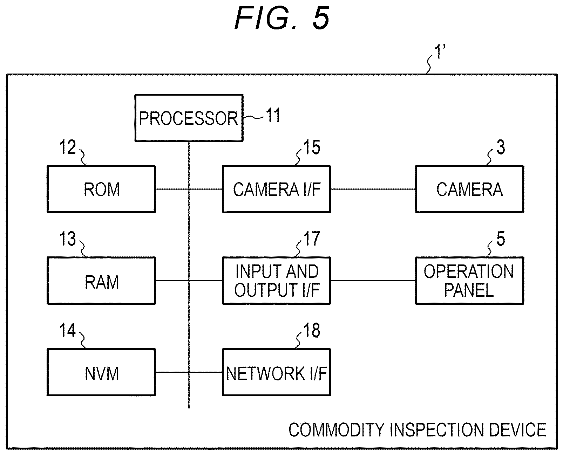

FIG. 5 is a block diagram showing a configuration example of a commodity inspection device 1' . As shown in FIG. 5, the commodity inspection device 1' includes a camera 3, an operation panel 5, a processor 11, a ROM 12, a RAM 13, an NVM 14, a camera interface 15, an input and output (I/O) interface 17, a network interface 18, and the like.

The commodity inspection device 1' may include components in addition to those shown in FIG. 5, and, in some examples, depicted components in FIG. 5 may be excluded from the commodity inspection device 1'.

Next, functions performed by the commodity inspection device 1' will be described. These functions of by the commodity inspection device 1' are realized by the processor 11 executing programs stored in the ROM 12, the NVM 14, or the like.

The processor 11 realizes the following functions in addition to the functions realized in the checkout device 1 according to the first embodiment.

The processor 11 has a function of executing a commodity inspection process on the basis of a recognition result list.

The processor 11 acquires a commodity list indicating a commodity to be placed on a commodity table 6. For example, the commodity list indicates a commodity that might be placed on the commodity table 6 by a robot arm or the like. The processor 11 may acquire the commodity list from an external device or may acquire the commodity list in accordance with a user's input.

When the commodity list is acquired, the processor 11 specifies the commodity as described above and generates a recognition result list.

When the recognition result list is generated, the processor 11 compares the commodity list and the recognition result list with each other. Once the commodity list and the recognition result list are compared with each other, the processor 11 outputs comparison results.

After the commodity list and the recognition result list are compared with each other, the processor 11 may output information indicating that a commodity disposed on the commodity table 6 is appropriate as the comparison results. For example, the processor 11 displays information indicating that a commodity disposed on the commodity table 6 is appropriate on the operation panel 5 when the recognized commodity is identified/recognized as a commodity on the commodity list.

When the commodity list and the recognition result list do not match each other, the processor 11 outputs information indicating that a commodity disposed on the commodity table 6 is not appropriate as comparison results. For example, the processor 11 displays information indicating that a commodity disposed on the commodity table 6 is not appropriate on the operation panel 5. In addition, the processor 11 may output a fact that the commodity list and the recognition result list do not match each other as comparison results. For example, the processor 11 displays information indicating a difference between the commodity list and the recognition result list on the operation panel 5.

In some examples, the processor 11 may output the comparison results to an external device.

Next, an operation example of the commodity inspection device 1' will be described.

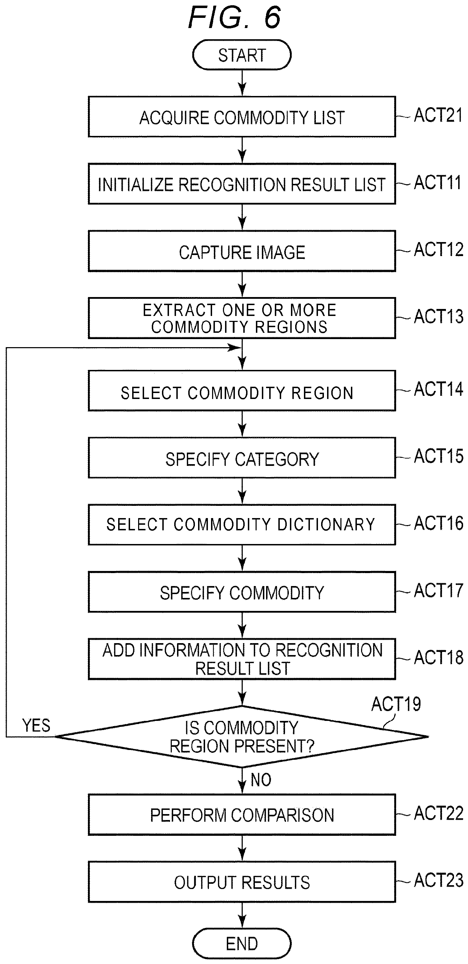

FIG. 6 is a flowchart showing an operation example of the commodity inspection device 1'.

Here, it is assumed that a user disposes a commodity on the commodity table 6.

First, the processor 11 of the commodity inspection device 1' acquires a commodity list (ACT21). When the commodity list is acquired, the processor 11 proceeds to ACT11.

ACT11 to ACT19 are as described above, and thus additional description thereof will be omitted.

When it is determined that there is no commodity region in which a commodity is not yet specified (ACT19, NO), the processor 11 compares the commodity list and the recognition result list with each other (ACT22) . When the commodity list and the recognition result list are compared with each other, the processor 11 outputs comparison results (ACT23). After the comparison results are output, the processor 11 terminates the operation.

In some examples, the processor 11 may acquire the commodity list before ACT22. For example, the processor 11 may acquire the commodity list after YES in ACT19.

The commodity inspection device configured as described above can perform a commodity inspection process on the basis of identification results for commodities.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A commodity identification apparatus, comprising:
a camera directed at a commodity placement region;
a storage device in which a category dictionary and a plurality of commodity dictionaries corresponding to a plurality of commodity categories, respectively, are stored; and
a processor configured to:
perform a first operation to identify a commodity category of a commodity included in an image captured by the camera with reference to the category dictionary stored in the storage device;
select, as a target commodity dictionary, one of the plurality of commodity dictionaries corresponding to the identified commodity category; and
perform a second operation to identify the commodity with reference to the target commodity dictionary.

2. The commodity identification apparatus according to claim 1, wherein
the plurality of commodity dictionaries includes a first commodity dictionary corresponding to a first commodity category and a second commodity dictionary corresponding to a second commodity category, and
the processor selects the first commodity dictionary as the target commodity dictionary when the identified commodity category is the first commodity category and selects the second commodity dictionary as the target commodity dictionary when the identified commodity category is the second commodity category.

3. The commodity identification apparatus according to claim 1 or 2, wherein
the category dictionary indicates an external feature of a commodity category with respect to each of multiple commodity categories, and
during the first operation, the processor determines an image region of the commodity from the image captured by the camera and determines the commodity category of the commodity based on an external feature of the image region with reference to the category dictionary.

4. The commodity identification apparatus according to claim 3, wherein
during the first operation, the processor determines a plurality of image regions of commodities from the image captured by the camera and selects one of the image regions corresponding to the commodity.

5. The commodity identification apparatus according to any of claims 1 to 4, wherein
the processor is further configured to update the category dictionary through a machine learning process based on a result of the first operation.

6. The commodity identification apparatus according to any of claims 1 to 5, wherein
each of the commodity dictionaries associates a feature value of a representative image for each of multiple commodities that are categorized into a corresponding commodity category, and
during the second operation, the processor determines a feature value of the image region and identifies the commodity based on the feature value of the image region with reference to the target commodity dictionary.

7. The commodity identification apparatus according to any of claims 1 to 6, wherein the processor is further configured to update the target commodity dictionary through a machine learning process based on a result of the second operation.

8. The commodity identification apparatus according to claim 6 or 7, wherein the processor is further configured to remove a feature value of a representative image of a commodity that is deregistered from one of the commodity dictionaries without making changes to the category dictionary.

9. The commodity identification apparatus according to any of claims 1 to 8, wherein the processor is further configured to perform a transaction settlement operation for the commodity identified through the second operation.

10. The commodity identification apparatus according to any of claims 1 to 9, wherein the processor is further configured to compare an identification of the commodity that is obtained in advance to an identification of the commodity obtained through the second operation.

11. A method for commodity identification, comprising:
storing a category dictionary and a plurality of commodity dictionaries corresponding to a plurality of commodity categories, respectively;
performing a first operation to identify a commodity category of a commodity included in an image captured by a camera with reference to the category dictionary;
selecting, as a target commodity dictionary, one of the plurality of commodity dictionaries corresponding to the identified commodity category; and
performing a second operation to identify the commodity with reference to the target commodity dictionary.

12. The method according to claim 11, wherein
the plurality of commodity dictionaries includes a first commodity dictionary corresponding to a first commodity category and a second commodity dictionary corresponding to a second commodity category, and
the selecting one of the plurality of commodity dictionaries comprises:
selecting the first commodity dictionary as the target commodity dictionary when the identified commodity category is the first commodity category; and
selecting the second commodity dictionary as the target commodity dictionary when the identified commodity category is the second commodity category.

13. The method according to claim 11 or 12, wherein
the category dictionary associates an external feature of a commodity category with respect to each of multiple commodity categories, and
the first operation comprises:
detecting an image region of the commodity from the image captured by the camera; and
selecting the commodity category of the commodity based on an external feature of the image region with reference to the category dictionary.

14. The method according to claim 13, wherein detecting the image region of the commodity comprises:
detecting a plurality of image regions of commodities from the image captured by the camera; and
selecting one of the image regions corresponding to the commodity.

15. The method according to any of claims 11 to 14, further comprising:
updating the category dictionary through a machine learning process based on a result of the first operation.
